# EUROPÄISCHE PATENTSCHRIFT

(11) **EP 0 580 889 B1**
(45) Veröffentlichungstag und Bekanntmachung des Hinweises auf die Patenterteilung: **17.12.1997**
(21) Anmeldenummer: 92113024.1
(22) Anmeldetag: 30.07.1992
(51) Int. Cl.: H04B 10/18

(54) **Verfahren zur Kompensation von nichtlinearen Signalverzerrungen elektrooptischer Wandler in einem optischen Telekommunikationssystem**
Method for the compensation of the non-linear distortion of an electro-optical converter in an optical telecommunications system
Procédé pour la compensation de la distorsion non-linéaire d'un convertisseur électro-optique dans un système de télécommunications optique

(43) Veröffentlichungstag der Anmeldung: 02.02.1994
(73) Patentinhaber: SIEMENS AKTIENGESELLSCHAFT, 80333 München (DE)
(72) Erfinder: Gosslau, Andreas, Dr.-Ing., W-8000 Müchen 83 (DE)

(56) Entgegenhaltungen:
- EP-A- 0 412 830
- LASER FOCUS Bd. 14, Nr. 10, Oktober 1978, NEWTON US Seiten 54 - 61 STRAUS 'Linearized transmitters for analog fiber links'

## Beschreibung

Bekannte elektrooptische Wandler wie beispielsweise Leuchtdioden, Laserdioden oder optische Quellen mit externen Modulatoren weisen nichtlineare Kennlinien auf, auf Grund derer es zu nichtlinearen Signalverzerrungen kommt; in mit solchen elektrooptischen Wandlern versehenen optischen Telekommunikationssystemen haben solche Signalverzerrungen insbesondere bei einer Übertragung von Analogsignalen eine merkliche Verschlechterung der Signalqualität zur Folge.

Um dem entgegenzuwirken, kann man einen Teil des vom elektrooptischen Wandler abgegebenen Lichts in ein elektrisches Signal rückwandeln, davon das ursprüngliche elektrische Signal subtrahieren und das so erhaltene Fehlersignal nach erneuter elektrooptischer Wandlung mit dem von dem genannten elektrooptischen Wandler abgegebenen Licht zusammenführen, so daß die darin enthaltene Signalverzerrung beseitigt wird (Fock, Tucker: "Reduction of Distortion in Analogue Modulated Semiconductor Lasers by Feedforward Compensation", ELECTRONICS LETTERS 27 (1991) 8, 11.4.1991, 669...671). Die Verzerrungsfreiheit kann dabei allerdings allenfalls so gut sein, wie die nach der optoelektrischen Rückwandlung erforderliche erneute elektrooptische Wandlung nicht ihrerseits wieder verzerrungsbehaftet ist.

Eine andere Möglichkeit der Kompensation solcher Signalverzerrungen (die, unter weiteren Alternativen, in J. Straus: "Linearized transmitters for analog fiber links", LASER FOCUS, Band 14, Nr. 10, Oktober 1978, Newton US; Seiten 54-61, offenbart wird) besteht in einer sendeseitigen entsprechenden Vorverzerrung des elektrischen Signals, was allerdings voraussetzt, daß man die Kennlinie des jeweiligen elektrooptischen Wandlers überhaupt kennt.

Die Erfindung geht demgegenüber einen vorteilhaften anderen Weg, um die Nachteile der bekannten Kompensationsverfahren zu vermeiden.
Die Erfindung betrifft ein Verfahren zur Kompensation von durch eine nichtlineare Kennlinie eines elektrooptischen Wandlers hervorgerufenen nichtlinearen Signalverzerrungen in optischen Telekommunikationssystemen, unter Beeinflussung des zu übertragenden, dem elektrooptischen Wandler zugeführten elektrischen Nutzsignals; dieses Verfahren ist erfindungsgemäß dadurch gekennzeichnet, daß sendeseitig dem elektrischen Nutzsignal ein Dithersignal überlagert wird, daß das Signalgemisch nach elektrooptischer Wandlung als optisches Signal übertragen wird und daß empfangsseitig nach optoelektrischer Wandlung das elektrische Empfangssignal von dem Dithersignal wieder befreit wird. Dabei kann in weiterer Ausgestaltung der Erfindung empfangsseitig von dem elektrischen Empfangssignal ein mit dem sendeseitigen Dithersignal gleiches Dithersignal subtrahiert werden; zusätzlich oder alternativ dazu ist es aber auch möglich, daß sendeseitig ein hochfrequentes Signal, z.B. ein hochfrequentes Sinussignal, als Dithersignal überlagert wird, von dem empfangsseitig das elektrische Empfangssignal durch Tiefpaßfilterung befreit wird.

Weitere Besonderheiten der Erfindung werden aus der nachfolgenden Beschreibung anhand der Zeichnungen ersichtlich. Dabei zeigen
- Fig. 1: ein von dem Grundprinzip der Erfindung gebrauchmachendes optisches Telekommunikationssystem und
- Fig. 2: ein vorteilhaftes Ausführungsbeispiel eines solchen Telekommunikationssystems; des weiteren verdeutlichen
- Fig. 3: eine zweckmäßige Weiterbildung der Erfindung und
- Fig. 4: schließlich die Anwendung der Erfindung auf optische Quellen mit externen Modulatoren.

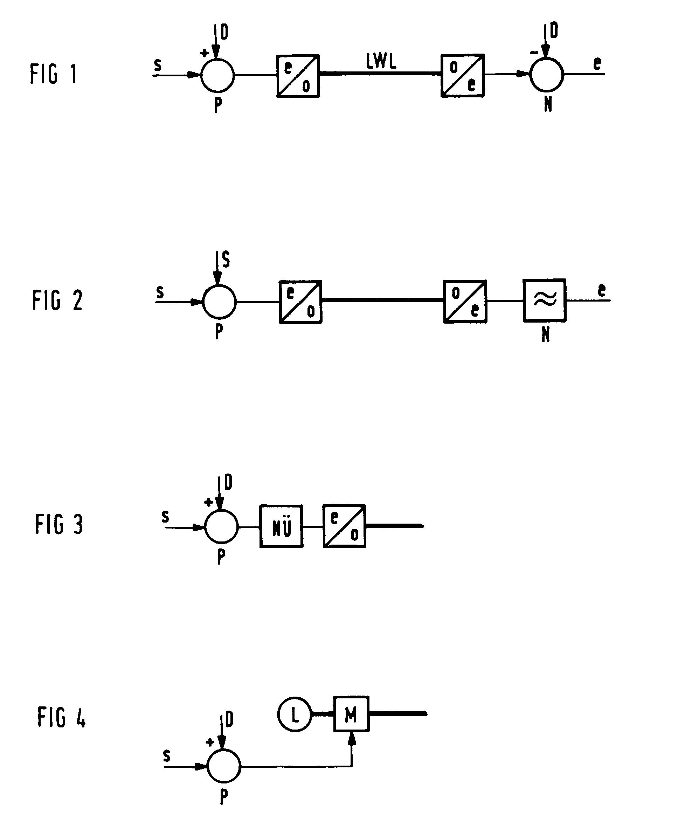

In Fig. 1 ist in einem zum Verständnis der Erfindung erforderlichen Umfange ein von einer elektrischen Sendesignalleitung s zu einer elektrischen Empfangssignalleitung e führendes optisches Telekommunikationssystem mit einem sendeseitigen elektrooptischen Wandler e/o und einem empfangsseitigen optoelektrischen Wandler o/e skizziert; zwischen den beiden Wandlern möge eine optische Übertragungsstrecke insbesondere in Form eines Lichtwellenleiters LWL verlaufen. In einem solchen optischen Telekommunikationssystem werden durch Nichtlinearitäten der Kennlinie des elektrooptischen Wandlers e/o nichtlineare Signalverzerrungen verursacht; um diese nichtlinearen Signalverzerrungen zu kompensieren, wird dem dem elektrooptischen Wandler e/o von der elektrischen Sendesignalleitung s her zugeführten elektrischen Nutzsignal an einer dem elektrooptischen Wandler e/o vorgelegenen Summationsstelle P ein über eine Dithersignalleitung D zugeleitetes Dithersignal überlagert. Nach elektrooptischer Umwandlung des dabei erhaltenen Signalgemischs in ein über die optische Übertragungsstrecke LWL zur Empfangsseite übertragenes optisches Signal und Rückwandlung dieses Signals in ein elektrisches Signal wird das am Ausgang des optoelektrischen Wandlers o/e auftretende elektrische Empfangssignal wieder vom Dithersignal befreit.
Wie dies auch in Fig. 1 angedeutet ist, kann das dadurch geschehen, daß in einem dem optoelektrischen Wandler o/e nachgeschalteten Subtraktionsglied N ein dem sendeseitigen Dithersignal gleiches Dithersignal von dem elektrischen Empfangssignal subtrahiert wird, so daß schließlich auf der elektrischen Empfangssignalleitung e das elektrische Nutzsignal unverzerrt auftritt.

Als Dithersignal kann vorzugsweise ein Sinussignal verwendet werden, dessen Frequenz typischerweise wesentlich höher ist als die höchste Frequenz des Nutzsignals. In Fig. 2 ist angedeutet, daß ein solches Sinussignal auf einer Dithersignalleitung S einem zwischen Sendesignalleitung s und elektrooptischem Wandler e/o liegenden Summationsglied P zugeführt wird. Die Summe aus Nutzsignal und Dithersignal wird nach elektrooptischer Wandlung als optisches Signal übertragen; auf der Empfangsseite wird das optische Signal im optoelektrischen Wandler o/e wieder in ein elektrisches Signal rückgewandelt. Dieses elektrische Empfangssignal wird im Ausführungsbeispiel nach Fig. 2 durch Tiefpaßfilterung in einem Tiefpaßfilter N von dem hochfrequenten Sinus-Dithersignal befreit, und auf der Empfangssignalleitung e tritt das unverzerrte Nutzsignal auf.

Durch die aus Fig. 1 und Fig. 2 ersichtliche Überlagerung eines Dithersignals über das elektrooptisch umzuwandelnde elektrische Nutzsignal erscheint die an sich nichtlineare Kennlinie des elektrooptischen Wandlers e/o linearisiert. Die resultierende Kennlinie ergibt sich als das Faltungsprodukt der ursprünglichen, nichtlinearen Wandlerkennlinie und der Amplitudenwahrscheinlichkeitsdichte des Dithersignals (Gelb, Van der Velde: "Multiple-input describing functions and nonlinear system design", New York McGraw-Hill Book Company, 1968, pp. 345...350). Man muß dann dafür Sorge tragen, daß empfangsseitig das Dithersignal wieder entfernt wird, was in der aus Fig. 1 und Fig. 2 ersichtlichen Weise geschehen kann.

Es kann zweckmäßig sein, auf der Sendeseite die nichtlineare Kennlinie des elektrooptischen Wandlers noch zu modifizieren. Dies kann man beispielsweise erreichen, indem man dem Wandler ein elektrisches Übertragungsglied vorschaltet, das eine nichtlineare, vorzugsweise begrenzende Kennlinie aufweist. Dies verdeutlicht auch Fig. 3, wo ein solches nichtlineares elektrisches Übertragungsglied mit NÜ bezeichnet ist.

Als elektrooptische Wandler können nicht nur intern modulierbare Lichtquellen, wie beispielsweise Laserdioden, Anwendung finden, sondern auch optische Quellen mit externen Modulatoren, wie dies Fig. 4 verdeutlicht. Wie Fig. 4 zeigt, kann einer nichtmodulierbaren oder zumindest nicht modulierten Lichtquelle L ein beispielsweise nach dem Richtkopplerprinzip arbeitender optischer Modulator M nachgeschaltet sein, der seinerseits von einem mit dem Nutzsignal (s) und dem Dithersignal (D) beaufschlagten Summationsglied P her gesteuert sein möge.

## Patentansprüche

1. Verfahren zur Kompensation von durch eine nichtlineare Kennlinie eines elektrooptischen Wandlers (e/o) hervorgerufenen nichtlinearen Signalverzerrungen in optischen Telekommunikationssystemen, unter Beeinflussung des zu übertragenden, dem elektrooptischen Wandler zugeführten elektrischen Nutzsignals(s),
**dadurch gekennzeichnet,**
daß sendeseitig dem elektrischen Nutzsignal(s) ein Dithersignal (D) überlagert wird (P), das Signalgemisch nach elektrooptischer Wandlung (e/o) als optisches Signal übertragen wird und empfangsseitig nach optoelektrischer Wandlung (o/e) das elektrische Empfangssignal von dem Dithersignal (D) wieder befreit wird (N).

2. Verfahren nach Anspruch 1,
**dadurch gekennzeichnet,**
daß von dem elektrischen Empfangssignal ein gleiches Dithersignal (D) subtrahiert wird.

3. Verfahren nach Anspruch 1,
**dadurch gekennzeichnet,**
daß sendeseitig ein hochfrequentes Signal (S) als Dithersignal überlagert wird, von dem empfangsseitig das elektrische Empfangssignal durch Tiefpaßfilterung befreit wird.

4. Verfahren nach Anspruch 3,
**dadurch gekennzeichnet,**
daß ein hochfrequentes Sinussignal (S) als Dithersignal überlagert wird.

5. Verfahren nach einem der Ansprüche 1 bis 4,
**dadurch gekennzeichnet,**
daß sendeseitig die nichtlineare Kennlinie des elektrooptischen Wandlers durch ein vorgeschaltetes, eine nichtlineare Übertragungskennlinie aufweisendes Übertragungsglied (Nü) zusätzlich modifiziert wird.

6. Verfahren nach Anspruch 5,
**dadurch gekennzeichnet,**
daß sendeseitig die nichtlineare Kennlinie des elektrooptischen Wandlers durch ein vorgeschaltetes, eine begrenzende Übertragungskennlinie aufweisendes Übertragungsglied (Nü) zusätzlich modifiziert wird.

## Revendications

1. Procédé de compensation de distorsions non-linéaires de signaux dans des systèmes de télécommunication optiques, qui sont provoquées par une caractéristique non-linéaire d'un convertisseur (e/o) électro-optique, par exercice d'une influence sur le signal utile (s) électrique à transmettre qui est envoyé au convertisseur électro-optique,
caractérisé en ce que
on superpose (P) du côté émission au signal (s) utile électrique, un signal (D) de vibration, on transmet le mélange de signaux, après conversion (e/o) électro-optique en tant que signal optique et on libère (N) de nouveau du côté réception, après conversion opto-électrique (o/e), le signal électrique de réception du signal (D) de vibration.

2. Procédé suivant la revendication 1,
caractérisé en ce que
on soustrait un signal (D) de vibration identique du signal électrique de réception.

3. Procédé suivant la revendication 1,
caractérisé en ce que
on superpose du côté émission en tant que signal de vibration un signal (S) haute fréquence, dont on libère du côté réception le signal électrique de réception par filtrage passe-bas.

4. Procédé suivant la revendication 3,
caractérisé en ce que
on superpose comme signal de vibration un signal (S) sinusoïdal haute fréquence.

5. Procédé suivant l'une des revendications 1 à 4,
caractérisé en ce que
on modifie en supplément du côté émission la caractéristique non-linéaire du convertisseur électro-optique par un élément (NÜ) de transmission branché en amont et ayant une caractéristique de transmission non-linéaire.

6. Procédé suivant la revendication 5,
caractérisé en ce que
on modifie en supplément du côté émission la caractéristique non-linéaire du convertisseur électro-optique par un élément (NÜ) de transmission branché en amont et ayant une caractéristique de transmission écrêtant.

## Claims

1. Method for compensating non-linear signal distortions, caused by a non-linear characteristic of an electrical-to-optical transducer (e/o) , in optical telecommunications systems, including influencing the electrical wanted signal (s) which is fed to the electrical-to-optical transducer and is to be transmitted, characterized in that, at the transmit end, a dither signal (D) is superimposed (P) on the electrical wanted signal (s), after electrical-to-optical conversion (e/o) the composite signal is transmitted as an optical signal, and as at the receive end, the electrical received signal is freed (N) again from the dither signal (D) after optical-to-electrical conversion (o/e).

2. Method according to Claim 1, characterized in that an equal dither signal (D) is subtracted from the electrical received signal.

3. Method according to Claim 1, characterized in that, at the transmit end, a radio-frequency signal (s) is superimposed as the dither signal from which the electrical received signal is freed at the receive end by low-pass filtering.

4. Method according to Claim 3, characterized in that a radio-frequency sinusoidal signal (s) is superimposed as the dither signal.

5. Method according to one of Claims 1 to 4, characterized in that, at the transmit end, the non-linear characteristic of the electrical-to-optical transducer is additionally modified by an upstream transmission element (Nü) having a non-linear transfer characteristic.

6. Method according to Claim 5, characterized in that, at the transmit end, the non-linear characteristic of the electrical-to-optical transducer is additionally modified by an upstream transmitting element (Nü) having a limiting transfer characteristic.
